# EUROPÄISCHE PATENTSCHRIFT

(11) **EP 3 228 994 B1**
(45) Veröffentlichungstag und Bekanntmachung des Hinweises auf die Patenterteilung: **21.11.2018**
(21) Anmeldenummer: 17151121.5
(22) Anmeldetag: 12.01.2017
(51) Int. Cl.: G01D 5/347, G01D 18/00, G01D 5/36, G01D 1/02, G01D 5/244

(54) **VORRICHTUNG UND VERFAHREN ZUR WINKELMESSUNG**
METHOD AND DEVICE FOR MEASURING ANGLES
DISPOSITIF ET PROCÉDÉ DESTINÉS À LA MESURE D'UN ANGLE

(30) Priorität: 05.04.2016 DE 102016205592
(43) Veröffentlichungstag der Anmeldung: 11.10.2017
(73) Patentinhaber: Dr. Johannes Heidenhain GmbH, 83301 Traunreut (DE)
(72) Erfinder: SCHÜRMANN, Thomas, 83026 Rosenheim (DE)

(56) Entgegenhaltungen:
- EP-A2- 0 502 534
- WO-A2-2011/064317
- US-A1- 2004 178 332
- US-A1- 2015 323 355

## Beschreibung

### GEBIET DER TECHNIK

Die Erfindung betrifft eine Vorrichtung zur Winkelmessung nach Anspruch 1, sowie ein Verfahren zur Winkelmessung nach Anspruch 5. Eine erfindungsgemäße Vorrichtung, bzw. ein Verfahren zur Winkelmessung kann insbesondere die Genauigkeit bei der Messung der Winkelposition von Wellen mit großen Durchmessern, sowie bei Rundtischen und bei Teleskopanwendungen entscheidend verbessern.

### STAND DER TECHNIK

Hochgenaue Winkelmessgeräte zur Messung der Winkelposition einer Welle, z.B. eines Rundtisches, sind bekannt. Dabei gibt es Varianten mit messsystemseitiger Welle und Eigenlagerung, sowie Winkelmessgeräte ohne Eigenlagerung. Bei Geräten mit Eigenlagerung müssen, um eine hohe Genauigkeit zu erreichen, zum einen im Messsystem sehr genaue und damit sehr teure Präzisionslager eingesetzt werden, zum anderen muss ein hoher Aufwand betrieben werden, um die Welle des Messsystems, die eine Teilscheibe mit radialer Messteilung trägt, mit der zu messenden Welle mittels einer geeigneten Kupplung zu verbinden.

Bei Winkelmessgeräten ohne Eigenlagerung wird eine rotationssymmetrische Messteilung bzw. eine entsprechende Teilscheibe unmittelbar auf einer zu messenden Welle angeordnet. Entsprechende Abtasteinheiten zum Abtasten der Messteilung sind stationär zu der sich drehenden Teilscheibe angeordnet. Auch hier ist die präzise Anordnung aller Komponenten wesentlich für die erreichbare Messgenauigkeit.

Als Messteilung kommen bei diesen Winkelmessgeräten Inkrementalteilungen mit bis zu 36000 radialen Strichen zum Einsatz, wobei die Winkelauflösung durch Interpolation weiter erhöht wird.

Im Idealfall wäre nun die Genauigkeit der Winkelmessung bei Winkelmessgeräten lediglich von der Präzision, mit der die Messteilung auf die Teilscheibe aufgebracht wurde, und vom Messfehler der Abtasteinheit abhängig. In der Realität weist die Drehbewegung der Teilscheibe und somit der Messteilung bedingt durch Fertigungstoleranzen jedoch immer einen Exzentrizitäts- sowie einen Taumelfehler auf. Das liegt zum einen daran, dass der Mittelpunkt der Teilscheibe nie exakt auf der Rotationsachse der zu messenden Welle liegen kann und zum anderen, dass die Rotationsachsen der Teilscheibe und der zu messenden Welle nie exakt fluchtend angeordnet sein können. Als Folge davon variieren Abstand und Lage der Messteilung bezogen auf die Abtasteinheit innerhalb einer Umdrehung der zu messenden Welle, wodurch ein Messfehler bei der Winkelmessung entsteht.

Um insbesondere bei großen Winkelmessgeräten für Wellen mit großen Durchmessern, Rundtischen oder Teleskopanwendungen den hohen Aufwand für Präzisionslager und -kupplungen, sowie für die mechanische Justierung zu reduzieren, schlägt die DE 199 07 326 A1 vor, eine inkrementale Messteilung an mehreren Abtaststellen über den Umfang der Teilscheibe verteilt abzutasten und die daraus resultierenden Positionssignale auszuwerten und Exzentrizitäts- bzw. Taumelfehler zu korrigieren.

Bei der Neuprojektierung von Anlagen werden immer häufiger Winkelmessgeräte gefordert, die über eine serielle Datenschnittstelle verfügen, über die die Positionswerte in Form von digitalen Datenwörtern zu einer übergeordneten Steuerung übertragen werden können. Derartige absolute Winkelmessgeräte basieren meist auf der Abtastung einer absolut codierten Codespur. Diese Codespur ist beispielsweise ein mehrspuriger Code, z.B. ein Gray-Code, oder ein einspuriger Kettencode, ein sog. "Pseudo Random Code" (PRC). Die DE 10 2011 079 961 A1 beschreibt ein absolutes Winkelmessgerät, bei dem absolute Positionswerte mehrerer Abtastköpfe zu einem korrigierten absoluten Positionswert verarbeitet werden und dieser über eine serielle Datenschnittstelle an eine Folgeelektronik übertragbar ist.

### ZUSAMMENFASSUNG DER ERFINDUNG

Es ist Aufgabe der Erfindung, ein verbessertes absolutes Winkelmessgerät anzugeben.

Diese Aufgabe wird gelöst durch eine Vorrichtung nach Anspruch 1. Vorteilhafte Details dieser Vorrichtung ergeben sich aus den von Anspruch 1 abhängigen Ansprüchen.

Es wird nun eine Vorrichtung zur Winkelmessung in Form eines Winkelmessgeräts vorgeschlagen, umfassend
- eine Codescheibe, die eine konzentrisch zu ihrer Drehachse angeordnete Codespur mit einer absolut codierten Teilungsspur und einer inkrementalen Teilungsspur aufweist,
- wenigstens zwei Abtasteinheiten, die versetzt über den Umfang der Codescheibe angeordnet sind, zur Ermittlung von absoluten Positionswerten durch Abtastung der absolut codierten Teilungsspur und zur Erzeugung von inkrementalen Positionssignalen durch Abtastung der inkrementalen Teilungsspur,
- eine Kontrolleinheit, der über Schnittstellen die absoluten Positionswerte und die inkrementalen Positionssignale zur Bildung eines korrigierten absoluten Positionswerts zuführbar sind und die eine Geräteschnittstelle zur Kommunikation mit einer Folgeelektronik aufweist.
Die Kontrolleinheit umfasst eine Verarbeitungseinheit, mit einer Zählereinheit je Abtasteinheit, die mit den absoluten Positionswerten der jeweils zugeordneten Abtasteinheit initialisierbar sind und mit denen Zustandswechsel der inkrementalen Positionssignale der zugeordneten Abtasteinheit zählbar sind. Die Zählerstände der Zählereinheiten sind als absolute Positionswerte einer Korrektureinheit zugeführt, die diese zum korrigierten Positionswert verarbeitet. Der korrigierte Positionswert ist über die Geräteschnittstelle zur Folgeelektronik übertragbar

Weiter ist es Aufgabe der Erfindung, ein Verfahren anzugeben, mit dem die Genauigkeit eines derartigen absoluten Winkelmessgeräts verbessert werden kann.

Diese Aufgabe wird gelöst durch ein Verfahren nach Anspruch 5. Vorteilhafte Details des Verfahrens ergeben sich aus den von Anspruch 5 abhängigen Ansprüchen.

Es wird nun ein Verfahren zur Winkelmessung mit einem Winkelmessgerät nach Anspruch 1 vorgeschlagen, das folgende Schritte aufweist:
- initialisieren der Zählereinheiten mit den absoluten Positionswerten der jeweils zugeordneten Abtasteinheit,
- zählen von Zustandswechseln der inkrementalen Positionssignale der zugeordneten Abtasteinheit mit den Zählereinheiten,
- ausgeben der Zählerstände der Zählereinheiten als absolute Positionswerte an die Korrektureinheit,
- verarbeiten der absoluten Positionswerte zum korrigierten Positionswert und
- übertragen des korrigierten Positionswerts zur Folgeelektronik.

Weitere Vorteile sowie Einzelheiten der vorliegenden Erfindung ergeben sich aus der nachfolgenden Beschreibung anhand der Figuren.

### KURZE BESCHREIBUNG DER ZEICHNUNGEN

Es zeigt
- Figur 1: ein Blockdiagramm eines erfindungsgemäßen Winkelmessgeräts,
- Figur 2: ein Blockdiagramm einer ersten Ausführungsform einer Kontrolleinheit eines erfindungsgemäßen Winkelmessgeräts und
- Figur 3: ein Blockdiagramm einer zweiten Ausführungsform einer Kontrolleinheit eines erfindungsgemäßen Winkelmessgeräts.

### BESCHREIBUNG DER AUSFÜHRUNGSFORMEN

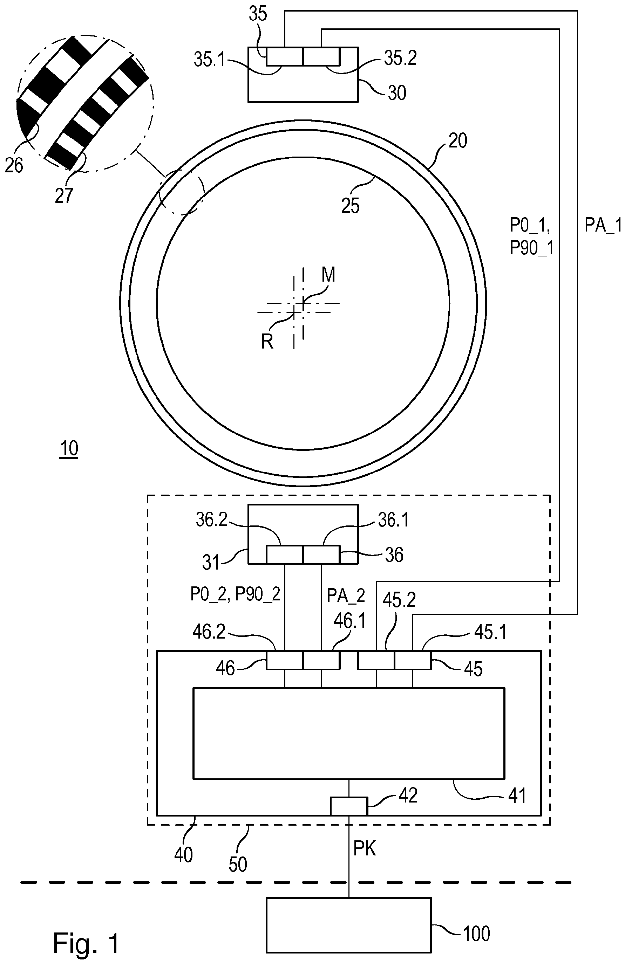

Figur 1 zeigt ein Blockdiagramm eines erfindungsgemäßen Winkelmessgeräts 10. Es umfasst als Maßverkörperung eine scheiben- oder ringförmige Codescheibe 20 mit einer radial um eine Drehachse M der Codescheibe 20 angeordneten Codespur 25, zwei Abtasteinheiten 30, 31, sowie eine Kontrolleinheit 40.

Für den Betrieb des Winkelmessgeräts 10 wird die Codescheibe 20 drehfest mit einem Maschinenteil verbunden, dessen Drehwinkel gemessen werden soll, so dass sie sich um ihre Drehachse M zusammen mit der Rotationsachse R des Maschinenteils dreht. Bei dem Maschinenteil handelt es sich beispielsweise um eine Welle oder Hohlwelle.

Die Codespur 25 auf der Codescheibe 20 ist so ausgestaltet, dass durch ihre Abtastung mit jeweils einer der Abtasteinheiten 30, 31 sowohl absolute Positionswerte PA_1, PA_2, als auch inkrementale Positionssignale P0_1, P90_1, P0_2, P90_2 generierbar sind. Unter inkrementalen Positionssignalen sind hierbei Signale zu verstehen, die, beispielsweise durch Zählung von Zustandswechseln, dazu geeignet sind, relative Positionsänderungen der Codescheibe 20 festzustellen. Für die Ausführung der Codespur sind verschiedenste physikalische Abtastprinzipien geeignet, beispielsweise optische, magnetische, kapazitive oder induktive.

In einer bevorzugten Ausgestaltung umfasst die Codespur 25 für die Generierung von absoluten Positionswerten eine absolut codierte Teilungsspur 26, bei der die Codierung in Form eines einspurigen Kettencodes (Pseudo Random Code, PRC) ausgeführt ist. Alternativ kann die absolut codierte Teilungsspur 26 auch mehrspurig ausgeführt sein. Die Information über die absolute Winkelposition ist dann in parallelen Teilungsspuren angelegt (beispielsweise basierend auf dem Gray-Code). Aus der Abtastung der absolut codierten Teilungsspur 26 resultieren stets unmittelbar absolute Positionswerte.

Zur Erzeugung der inkrementalen Positionssignale P0_1, P90_1, P0_2, P90_2 dient eine inkrementale Teilungsspur 27, die parallel zur absolut codierten Teilung 26 angeordnet ist. Sie weist in bekannter Weise in Messrichtung eine regelmäßige Abfolge von Codeelementen auf, aus deren Abtastung periodische Positionssignale resultieren. Die Anzahl der Signalperioden innerhalb einer Umdrehung der Codescheibe 20 entspricht der Anzahl der Codeelemente. Bei konstanter Drehzahl sind die inkrementalen Positionssignale P0_1, P90_1, P0_2, P90_2 weitgehend sinusförmig. Um auch eine drehrichtungsabhängige Positionsmessung zu ermöglichen, sind die Abtasteinheiten 30, 31 so ausgestaltet, dass aus der Abtastung der inkrementalen Teilungsspur 27 zwei zueinander phasenverschobene Positionssignale resultieren. Typischerweise beträgt die Phasenverschiebung 90°.

Es sind Winkelmessgeräte bekannt, bei denen die Codespur 25 lediglich eine einzige Teilungsspur aufweist und durch Abtastung dieser einen Teilungsspur sowohl absolute Positionswerte, als auch inkrementale Positionssignale erlangt werden können. Derartige Systeme sind ebenfalls zur Ausführung der vorliegenden Erfindung geeignet.

Abweichend zum dargestellten Beispiel kann die Codescheibe auch zylinderförmig (trommelförmig) ausgeführt und die Codespur auf deren zylindrischer Außenseite angeordnet sein. Besonders bei großen Außendurchmessern von derartigen Codescheiben kann die Codespur auch auf einem Stahlband angeordnet sein, das in eine auf der Außenseite des Zylinders befindliche Nut eingelegt und mit einem Spannschloss gespannt wird.

Wie einleitend beschrieben treten durch unvermeidbare Toleranzen bei der mechanischen Verbindung des zu messenden Maschinenteils (z.B. einer Welle) mit der Maßverkörperung 20, 25 Exzentrizitäts- und Taumelfehler auf, beispielsweise weil, wie in Figur 1 dargestellt, die Rotationsachse R des zu messenden Maschinenteils (de Welle) und der Mittelpunkt M der Codescheibe 20 versetzt zueinander angeordnet sind. Das gilt sowohl für Winkelmessgeräte 10 ohne Eigenlagerung, bei denen die Codescheibe 20 direkt auf der zu Welle angeordnet ist, als auch für eigengelagerte Winkelmessgeräte 10, die selbst eine Welle umfassen, an der die Codescheibe 20 drehfest befestigt ist und die wiederum mit der zu messenden Welle über eine Wellenkupplung verbunden ist.

Die Abtasteinheiten 30, 31 sind zur Abtastung der Codespur 25 ortsfest im Abstand von 180° um den Umfang der Codescheibe 20 versetzt angeordnet. Der Offset, der sich hieraus bei der Ermittlung der absoluten Positionswerte PA_1, PA_2 in den Abtasteinheiten 30, 31 ergibt, kann an jeder geeigneten Stelle berücksichtigt werden, beispielsweise bereits in den Abtasteinheiten 30, 31 oder auch in der weiteren Verarbeitung in der Kontrolleinheit 40.

Zur Ausführung der vorliegenden Erfindung sind, wie im vorliegenden Beispiel, wenigstens zwei Abtasteinheiten 30, 31 notwendig. Die Erfindung ist aber nicht auf diese Anzahl begrenzt, es können auch drei oder mehr Abtasteinheiten zum Einsatz kommen.

Allgemein betrachtet ist es für die Korrektur der absoluten Positionswerte PA_1, PA_2 vorteilhaft, wenn die Abtasteinheiten 30, 31 gleichmäßig über den Umfang der Codescheibe 20 verteilt angeordnet sind. Kommen drei Abtasteinheiten zum Einsatz, beträgt der bevorzugte Versatz somit 120°, bei vier Abtasteinheiten 90°, usw.

Zur Ausgabe der absoluten Positionswerte PA_1, PA_2, sowie der inkrementalen Positionssignale P0_1, P90_1, P0_2, P90_2 weisen die Abtasteinheiten 30, 31 Schnittstellen 35, 36 auf, wobei jede Schnittstelle 35, 36 wiederum eine Absolutwert-Schnittstelle 35.1, 36.1 und eine Inkrementalsignal-Schnittstelle 35.2, 36.2 umfasst. Die Schnittstellen 35, 36 sind über geeignete Leitungen mit korrespondierenden Schnittstellen 45, 46 der Kontrolleinheit 40 verbunden, die ebenfalls je eine Absolutwert-Schnittstelle 45.1, 46.1 und eine Inkrementalsignal-Schnittstelle 45.2, 46.2 aufweisen.

Die Absolutwert-Schnittstellen 35.1, 36.1, bzw. 45.1, 46.1 sind beliebige digitale Datenschnittstellen. Bevorzugt kommen hier serielle Schnittstellen zum Einsatz. Besonders geeignete serielle Schnittstellen sind hierbei bekannte Standardschnittstellen für Positionsmessgeräte wie beispielsweise EnDat oder SSI. Darüber hinaus können aber auch Feldbussysteme (z.B. CAN-Bus, Interbus-S, SERCOS) oder Schnittstellen, die unter dem Oberbegriff "Echtzeit-Ethernet" zusammengefasst werden können, als Absolutwert-Schnittstellen 35.1, 36.1, 45.1, 46.1 zum Einsatz kommen. Dementsprechend kann es sich bei den Schnittstellenverbindungen, wie in Figur 1 dargestellt, um Punkt-zu-Punkt-Verbindungen handeln, es können aber auch Busverbindungen mit Linien- oder Ringstruktur vorliegen. Die Übertragung der Datensignale kann über herkömmliche elektrische Leitungen erfolgen. Insbesondere bei großen räumlichen Abständen zwischen der Kontrolleinheit 40 und den Abtasteinheiten 30, 31 kann es aber auch vorteilhaft sein, als Signalleitungen Lichtwellenleiter und als Absolutwert-Schnittstellen 35.1, 36.1, bzw. 45.1, 46.1 optische Schnittstellen einzusetzen. Die Inkrementalsignal-Schnittstelle 35.2, 36.2 ist geeignet ausgestaltet, um die inkrementalen Positionssignale P0_1, P90_1, P0_2, P90_2, die entweder digital, beispielsweise in Form von zwei um 90° zueinander phasenverschobenen Rechtecksignalen, oder analog, beispielsweise in Form zweier um 90° phasenverschobener, bei konstanter Umdrehungsgeschwindigkeit der zu messenden Motorwelle weitgehend sinusförmiger Positionssignale, vorliegen können, zu den korrespondierenden Inkrementalsignal-Schnittstellen 45.2, 46.2 der Kontrolleinheit 40 zu übertragen.

Die Kontrolleinheit 40 umfasst weiter zur Kommunikation mit einer Folgeelektronik 100 eine Geräteschnittstelle 42. Diese ist mit Vorteil ebenfalls eine serielle Datenübertragungsschnittstelle, prominente Beispiele hierfür sind wiederum EnDat, SSI oder Echtzeit-Ethernet-Schnittstellen.

Weiter ist in der Kontrolleinheit 40 eine Verarbeitungseinheit 41 vorgesehen. Sie ist geeignet ausgestaltet, um die inkrementalen Positionssignale P0_1, P90_1, P0_2, P90_2 der Abtasteinheiten 30, 31 jeweils zu absoluten Positionswerten zu verarbeiten und aus diesen dann, beispielsweise durch Mittelwertbildung, korrigierte absolute Positionswerte PK zu generieren. Diese sind über die Geräteschnittstelle 42 zur Folgeelektronik 100 übertragbar.

Um aus den inkrementalen Positionssignalen P0_1, P90_1, P0_2, P90_2, die prinzipbedingt nur Informationen über relative Winkeländerungen enthalten, einen absoluten Positionswert erhalten zu können, ist es notwendig, eine Referenzierung vorzunehmen, d.h. wenigstens zu einem Zeitpunkt eine Absolutposition festzulegen. Ausgehend von dieser Referenzposition kann dann alleine mit den inkrementalen Positionssignalen P0_1, P90_1, P0_2, P90_2 der absolute Positionswert gebildet werden.

Erfindungsgemäß erfolgt nun die Referenzierung durch die absoluten Positionswerte PA_1, PA_2, die in den Abtastköpfen 30, 31 durch Abtastung der absolut codierten Teilungsspur 26 ermittelt und über die Absolutwert-Schnittstellen 35.1, 36.1, bzw. 45.1, 46.1 übertragen werden. Mit Vorteil wird die Referenzierung unmittelbar nach dem Einschalten des Winkelmessgeräts 10 in einer Initialisierungsphase durchgeführt, in der sich die Maschine, an der das Winkelmessgerät 10 betrieben wird, im Stillstand befindet. In diesem Fall ist gewährleistet, dass zwischen dem Zeitpunkt, zu dem die Messung der absoluten Positionswerte PA_1, PA_2 in den Abtasteinheiten 30, 31 stattfindet, und dem Zeitpunkt, zu dem diese absoluten Positionswerte PA_1, PA_2 in der Verarbeitungseinheit 41 als Referenzpositionen für die anschließende, auf der Auswertung der Abtastsignale der inkrementalen Teilungsspur 26 basierenden Ermittlung der absoluten Positionswerte eingesetzt werden, keine signifikanten Winkeländerungen auftreten. Eine Initialisierung bei sich bewegender Maschine ist unter Berücksichtigung der aufgrund von der Drehbewegung während der Initialisierung auftretenden Winkeländerungen jedoch auch möglich.

Insbesondere bei sehr großen Winkelmessgeräten 10, bei denen die Codescheibe 20, die Abtasteinheiten 30, 31, sowie die Kontrolleinheit 40 nicht gemeinsam in einem Gehäuse angeordnet sein können, sondern separat als Einzelkomponenten montiert werden, ist es vorteilhaft, die Kontrolleinheit 40 und eine der Abtasteinheiten 30, 31 (in Figur 1 die Abtasteinheit 31) zu einer Master-Abtasteinheit 50 zusammenzufassen. Dadurch wird zum einen die Montage des Winkelmessgeräts 10 erleichtert, zum anderen kann die Schnittstellenverbindung der entsprechenden Schnittstellen 36, 46 einfacher ausgeführt werden.

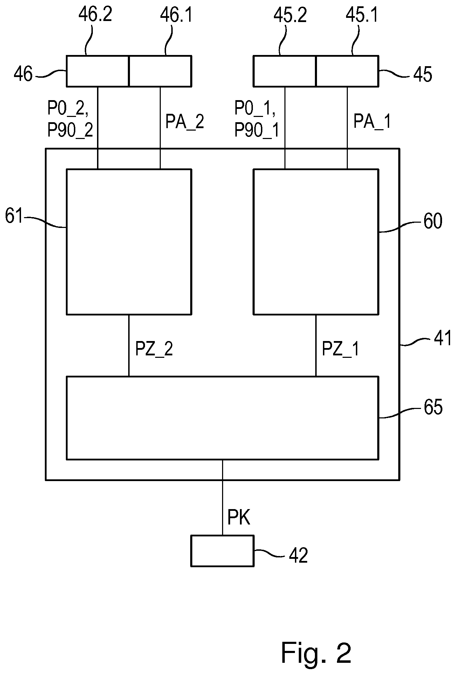

Der besondere Vorteil eines erfindungsgemäßen Winkelmessgeräts 10 ist es, dass aus der Sicht der Folgeelektronik 100 bezüglich der Kommunikation mit der Geräteschnittstelle 42 kein Unterschied zur Kommunikation mit einem Winkelmessgerät, wie es aus dem Stand der Technik bekannt ist, erkennbar ist, trotzdem aber eine wesentlich verbesserte Messgenauigkeit erreicht wird. Somit können auch bestehende Anlagen mit einem erfindungsgemäßen Winkelmessgerät 10 nachgerüstet und in ihrer Genauigkeit verbessert werden, ohne dass in die Folgeelektronik 100 eingegriffen werden muss. Figur 2 zeigt ein Blockdiagramm einer ersten Ausführungsform einer Kontrolleinheit 40 eines erfindungsgemäßen Winkelmessgeräts 10. Funktionsblöcke, die in Verbindung mit Figur 1 bereits beschrieben wurden, tragen die gleichen Bezugszeichen.

Zur Ermittlung des korrigierten Positionswerts PK umfasst die Verarbeitungseinheit 41 eine erste Zählereinheit 60, eine zweite Zählereinheit 61, sowie eine Korrektureinheit 65. Die Zählereinheiten 60, 61 sind so ausgestaltet, dass sie mit einem absoluten Positionswert PA_1, PA_2, der aus der Abtastung der absolut codierten Teilungsspur 26 resultiert, initialisierbar (ladbar) sind und von ihnen Zählsignale, abgeleitet aus den inkrementalen Positionssignalen P0_1, P90_1, P0_2, P90_2, die aus der Abtastung der inkrementalen Teilungsspur 27 resultieren, zählbar sind. Der Zählbereich der Zählereinheiten 60, 61 entspricht dabei der Anzahl der Zählschritte je Umdrehung, bei einem Überlauf wird der Zähler auf den Wert Null zurückgesetzt, bei einem Unterlauf wird er auf den Maximalwert gesetzt.

Dementsprechend sind der ersten Zählereinheit 60 von der ersten Abtasteinheit 30 über die Absolutwert-Schnittstellen 35.1, 45.1 absolute Positionswerte PA_1 zuführbar. Ebenso sind der ersten Zählereinheit 60 über die Inkrementalsignal-Schnittstellen 35.2, 45.2 die inkrementalen Positionssignale P0_1, P90_1 der ersten Abtasteinheit 30 zugeführt. Korrespondierend hierzu sind der zweiten Zählereinheit 61 absolute Positionswerte PA_2 zuführbar und inkrementale Positionssignale P0_2, P90_2 der zweiten Abtasteinheit 31 zugeführt.

Zum Zählen der Signalperioden in den Zählereinheiten 60, 61 können in bekannter Weise aus den analogen Positionssignalen P0_1, P90_1, P0_2, P90_2 mit Hilfe von Komparatoren digitale Rechtecksignale generiert werden, deren Signalflanken zum Auslösen von Zählschritten genutzt werden. Sind, wie im vorliegenden Beispiel, je Abtastkopf 30, 31 zwei zueinander phasenverschobene Positionssignale P0_1, P90_1, bzw. P0_2, P90_2 vorhanden, so kann aus der Abfolge der Signalflanken der Reckecksignale auf die Drehrichtung geschlossen werden, so dass der Zählvorgang drehrichtungsabhängig erfolgen kann. Bei dieser Vorgehensweise ergeben sich je Signalperiode vier Signalflanken (Zählsignale), so dass je Signalperiode vier Zählschritte erfolgen können. Dieses Grundprinzip zur Auswertung analoger inkrementaler Positionssignale kommt beispielsweise auch in der DE 199 07 326 A1 zum Einsatz, auf die hier explizit Bezug genommen wird.

Für den Betrieb des Winkelmessgeräts 10 werden die Zählereinheiten 60, 61 unmittelbar nach dem Einschalten mit den absoluten Positionswerten PA_1, PA_2 der zugeordneten Abtasteinheiten 30, 31 initialisiert. Die aktuellen absoluten Positionswerte PA_1, PA_2 werden hierfür von der Verarbeitungseinheit 41 über die jeweilige Schnittstellenverbindung von den Abtasteinheiten 30, 31 angefordert und den Zählereinheiten 60, 61 zugeführt, wo sie als Startwerte geladen werden. Nach der Initialisierung erfassen die Zählereinheiten 60, 61 Positionsänderungen (Änderungen der Winkelposition der Codescheibe 20) durch Zählen von Zählsignalen, abgeleitet aus den inkrementalen Positionssignalen P0_1, P90_1, P0_2, P90_2. Auf diese Weise entsprechen die Zählerstände der Zählereinheiten 60, 61 bereits unmittelbar nach dem Einschalten absoluten Positionswerten PZ_1, PZ_2 zur Verfügung. Nach dem Initialisieren, also im Normalbetrieb des Winkelmessgeräts 10, erfolgt die Bestimmung der absoluten Positionswerte PZ_1, PZ_2 basierend auf der Auswertung der Inkrementalsignale P0_1, P90_1, P0_2, P90_2. Dies ist besonders vorteilhaft, da Totzeiten der Absolutwert-Schnittstellen 35.1, 36.1, 45.1, 46.1 (also der Zeit zwischen dem Anfordern eines aktuellen absoluten Positionswerts PA_1, PA2 von den Abtasteinheiten 30, 31 und dem Eintreffen der Werte bei der Verarbeitungseinheit 41), nicht berücksichtigt werden müssen. Als Absolutwert-Schnittstellen 35.1, 36.1, 45.1, 46.1 können somit Schnittstellen mit geringen Datenübertragungsraten eingesetzt werden.

Die (aufgrund von Exzentrizität und/oder Taumel fehlerbehafteten) absoluten Positionswerte PZ_1, PZ_2 sind der Korrektureinheit 65 zugeführt, die aus ihnen den korrigierten absoluten Winkelwert PK bildet. Dies kann am einfachsten durch eine Mittelwertbildung erfolgen, also durch Addition der (im vorliegenden Beispiel) beiden absoluten Positionswerte PZ_1, PZ2 der Zählereinheiten 60, 61 und anschließender Division durch 2. Diese Rechenoperationen sind, schaltungstechnisch betrachtet, sehr einfach realisierbar.

Sowohl die Auswertung der inkrementalen Positionssignale P0_1, P90_1, P0_2, P90_2 in den Zählereinheiten 60, 61, als auch die darauffolgende Berechnung der korrigierten absoluten Winkelwerte PK in der Korrektureinheit 65 erfolgt praktisch verzögerungsfrei. Aus diesem Grund ist die vorliegende Erfindung besonders für Winkelmessgeräte 10 geeignet, die eine hohe Umdrehungsgeschwindigkeit und/oder eine hohe Anzahl von Teilungsperioden (Codeelementen) der inkrementalen Teilungsspur 27 erfassen müssen.

Anstelle der Mittelwertbildung können aber auch komplexere mathematische Berechnungen vorgenommen werden, die das Taumel- und/oder das Exzentrizitätsverhalten der Codescheibe 20 berücksichtigen.

Der korrigierte Positionswert PK ist über die Geräteschnittstelle 42 der Kontrolleinheit 40 zur Folgeelektronik 100 ausgebbar. Die Ausgabe des korrigierten Positionswerts PK wird beispielsweise durch einen Positionsanforderungsbefehl der Folgeelektronik 100 ausgelöst. Dadurch, dass der korrigierte Positionswert PK unmittelbar zur Verfügung steht, kann auch seine Ausgabe praktisch verzögerungsfrei erfolgen. Aus diesem Grund ist ein erfindungsgemäßes Winkelmessgerät 10 von der Folgeelektronik 100 praktisch nicht von einem herkömmlichen Winkelmessgerät mit nur einer Abtasteinheit unterscheidbar. Ein Austausch eines herkömmlichen Winkelmessgeräts durch ein erfindungsgemäßes Winkelmessgerät 10 ist daher problemlos möglich und führt unmittelbar zu einer erhöhten Genauigkeit der Maschine, an der das Winkelmessgerät betrieben wird.

Darüber hinaus kann die Korrektureinheit 65 die absoluten Positionswerte PZ_1, PZ_2 der Zählereinheiten 60, 61, ggf. auch in Verbindung mit dem ermittelten korrigierten Positionswert PK, auf Plausibilität überprüfen und bei Abweichungen, die eine festgelegte Toleranzschwelle überschreiten, über die Geräteschnittstelle 42 eine Warn- bzw. Fehlermeldung an die Folgeelektronik 100 senden.

Durch die versetzte Anordnung der Abtasteinheiten 30, 31 über den Umfang der Codescheibe 20 ergibt sich ein Offset zwischen den absoluten Positionswerten PA_1, PA_2, die aus der Abtastung der absolut codierten Teilungsspur 26 resultieren. Dieser Offset kann an geeigneter Stelle eliminiert werden, beispielweise bereits in den Abtasteinheiten 30, 31 (bzw. in nur einer der Abtasteinheiten 30, 31), in den Zählereinheiten 60, 61 bei deren Initialisierung, oder auch in der Korrektureinheit 65.

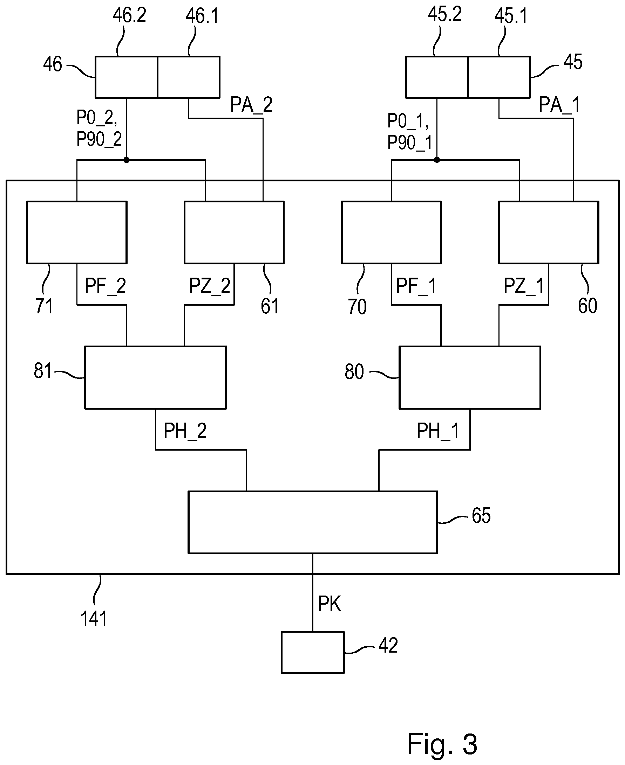

Figur 3 zeigt ein Blockdiagramm einer zweiten, alternativen Ausführungsform einer Kontrolleinheit 40 eines erfindungsgemäßen Winkelmessgeräts 10. Funktionsblöcke, die in Verbindung mit den Figuren 1 und 2 bereits beschrieben wurden, tragen die gleichen Bezugszeichen.

In Ergänzung zu der in Verbindung mit Figur 2 beschriebenen Kontrolleinheit 40 umfasst die Kontrolleinheit von Figur 3 je auszuwertender Abtasteinheit 30, 31 eine Interpolatoreinheit 70, 71 sowie eine Codeanschlusseinheit 80, 81.

Die Interpolatoreinheiten 70, 71 sind geeignet ausgestaltet, um aus den analogen, sinusförmigen Positionssignalen P0_1, P90_1, P0_2, P90_2 Feinpositionswerte PF_1, PF2 zu generieren, die die Position innerhalb einer Teilungsperiode (einer Signalperiode der Positionssignale P0_1, P90_1, P0_2, P90_2) angeben. Die Codeanschlusseinheiten 80, 81 sind wiederum geeignet ausgestaltet, um aus den jeweiligen in den Zählereinheiten 60, 61 generierten absoluten Positionswerten PZ_1, PZ_2 und den dazugehörenden Feinpositionswerten PF_1, PF2 hochauflösende absolute Positionswerte PH_1, bzw. PH_2 zu generieren. Die hochauflösenden absoluten Positionswerte PH_1, PH_2 sind, wie im vorherigen Beispiel, der Korrektureinheit 65 zugeführt, die hieraus den korrigierten absoluten Positionswert PK bildet.

Der aus der versetzten Anordnung der Abtasteinheiten 30, 31 resultierende Offset zwischen den absoluten Positionswerten kann auch in diesem Ausführungsbeispiel an jeder geeigneten Stelle berücksichtigt/eliminiert werden.

Durch die an sich bekannte Vorgehensweise zur Erhöhung der Auflösung der Positionsmessung durch Interpolation wird erreicht, dass bei einem erfindungsgemäßen Winkelmessgerät 10 bereits unmittelbar nach dem Einschalten, bzw. dem Referenzieren mit absoluten Positionswerten PA_1, PA_2, ein korrigierter absoluter Positionswert PK vorliegt, der nicht nur die Auflösung der absolut codierten Teilungsspur 26 (die einem Zählschritt der Zählereinheiten 60, 61 entspricht), sondern sogar die maximal erreichbare Auflösung (absolute Positionswerte PZ_1, PZ_2 erweitert um die dazugehörenden Feinpositionswerte PF_1, PF2) aufweist.

Die vorliegende Erfindung ist selbstverständlich nicht auf die beschriebenen Ausführungsbeispiele beschränkt, es existieren vielmehr im Rahmen der erfindungsgemäßen Überlegungen weitere Ausführungsformen, die dem Fachmann geläufig sind.

## Patentansprüche

1. Vorrichtung zur Winkelmessung in Form eines Winkelmessgeräts (10), umfassend
• eine Codescheibe (20), die eine konzentrisch zu ihrer Drehachse (M) angeordnete Codespur (25) mit einer absolut codierten Teilungsspur (26) und einer inkrementalen Teilungsspur (27) aufweist,
• wenigstens zwei Abtasteinheiten (30, 31), die winkelversetzt über den Umfang der Codescheibe (20) verteilt angeordnet sind, jeweils zur Ermittlung von absoluten Positionswerten (PA_1, PA_2) durch Abtastung der absolut codierten Teilungsspur (26) und jeweils zur Erzeugung von inkrementalen Positionssignalen (P0_1, P90_1, P0_2, P90_2) durch Abtastung der inkrementalen Teilungsspur (27), wobei die inkrementalen Positionssignale (P0_1, P90_1, P0_2, P90_2) als Abfolge von Zustandswechseln ausgegeben werden,
• eine Kontrolleinheit (40), der über Schnittstellen (35, 36, 45, 46) die absoluten Positionswerte (PA_1, PA_2) und die inkrementalen Positionssignale (P0_1, P90_1, P0_2, P90_2) zur Bildung eines korrigierten absoluten Positionswerts (PK) zuführbar sind und die eine Geräteschnittstelle (42) zur Kommunikation mit einer Folgeelektronik (100) aufweist,
wobei die Kontrolleinheit (40) eine Verarbeitungseinheit (41) umfasst, mit einer Zählereinheit (60, 61) je Abtasteinheit (30, 31), die mit den absoluten Positionswerten (PA_1, PA_2) der jeweils zugeordneten Abtasteinheit (30, 31) initialisierbar sind und die Zählereinheit (60, 61) so gestaltet ist, dass sie Zustandswechsel der inkrementalen Positionssignale (P0_1, P90_1, P0_2, P90_2) der zugeordneten Abtasteinheit (30, 31) zählt und die Zählerstände der Zählereinheiten (60, 61) als absolute Positionswerte (PZ_1, PZ_2) einer Korrektureinheit (65) zugeführt werden, die diese zum korrigierten Positionswert (PK) verarbeitet, und der korrigierte Positionswert (PK) über die Geräteschnittstelle (42) zur Folgeelektronik (100) übertragbar ist.

2. Vorrichtung nach Anspruch 1, wobei die Verarbeitungseinheit (141) weiter je Abtasteinheit (30, 31) eine Interpolatoreinheit (70, 71) und eine Codeanschlusseinheit (80, 81) umfasst, wobei
• den Interpolatoreinheiten (70, 71) jeweils die inkrementalen Positionssignale (P0_1, P90_1, P0_2, P90_2) der zugeordneten Abtasteinheit (30, 31) zugeführt sind und in den Interpolatoreinheiten (70, 71) Feinpositionswerte (PF_1, PF2) generierbar sind, die die Position innerhalb einer Signalperiode der inkrementalen Positionssignale (P0_1, P90_1, P0_2, P90_2) angeben und
• die Feinpositionswerte (PF_1, PF2) und die Zählerstände (PZ_1, PZ2) der Zählereinheiten (60, 61) den jeweiligen Codeanschlusseinheiten (80, 81) zugeführt sind, die hieraus hochauflösende absolute Positionswerte (PH_1, PH_2) generieren, die der Korrektureinheit (65) zur Bildung des korrigierten Positionswerts (PK) zugeführt sind.

3. Vorrichtung nach Anspruch 1, wobei die Abtasteinheiten (30, 31) in gleichmäßigen Winkelabständen um den Umfang der Codespur (25) verteilt angeordnet sind.

4. Vorrichtung nach einem der vorhergehenden Ansprüche, wobei eine der Abtasteinheiten (30, 31) und die Kontrolleinheit (40) zu einer Master-Abtasteinheit (50) zusammengefasst sind.

5. Verfahren zur Winkelmessung mit einem Winkelmessgerät (10) nach Anspruch 1, mit folgenden Schritten:
• initialisieren der Zählereinheiten (60, 61) mit den absoluten Positionswerten (PA_1, PA_2) der jeweils zugeordneten Abtasteinheit (30, 31),
• zählen von Zustandswechseln der inkrementalen Positionssignale (P0_1, P90_1, P0_2, P90_2) der zugeordneten Abtasteinheit (30, 31) mit den Zählereinheiten (60, 61),
• ausgeben der Zählerstände der Zählereinheiten (60, 61) als absolute Positionswerte (PZ_1, PZ_2) an die Korrektureinheit (65),
• verarbeiten der absoluten Positionswerte (PZ_1, PZ_2) zum korrigierten Positionswert (PK) und
• übertragen des korrigierten Positionswerts zur Folgeelektronik (100).

6. Verfahren nach Anspruch 5, wobei die Verarbeitungseinheit (141) weiter je Abtasteinheit (30, 31) eine Interpolatoreinheit (70, 71) und eine Codeanschlusseinheit (80, 81) umfasst, wobei
• den Interpolatoreinheiten (70, 71) jeweils die inkrementalen Positionssignale (P0_1, P90_1, P0_2, P90_2) der zugeordneten Abtasteinheit (30, 31) zugeführt werden und in den Interpolatoreinheiten (70, 71) Feinpositionswerte (PF_1, PF2) generiert werden, die die Position innerhalb einer Signalperiode der inkrementalen Positionssignale (P0_1, P90_1, P0_2, P90_2) angeben und
• die Feinpositionswerte (PF_1, PF2) und die Zählerstände (PZ_1, PZ2) der Zählereinheiten (60, 61) den jeweiligen Codeanschlusseinheiten (80, 81) zugeführt werden, die hieraus hochauflösende absolute Positionswerte (PH_1, PH_2) generieren, die wiederum der Korrektureinheit (65) zur Bildung des korrigierten Positionswerts (PK) zugeführt werden.

7. Verfahren nach Anspruch 5, wobei der korrigierte Positionswert (PK) durch Mittelwertbildung aus den absoluten Positionswerten (PZ_1, PZ_2) unter Berücksichtigung eines Offsets gebildet wird.

8. Verfahren nach Anspruch 6, wobei der korrigierte Positionswert (PK) durch Mittelwertbildung aus den hochauflösenden absoluten Positionswerten (PH_1, PH_2) unter Berücksichtigung eines Offsets gebildet wird.

## Claims

1. Apparatus for angle measurement in the form of an angle measuring device (10), comprising
• a code disc (20), which has a code track (25), which is arranged concentrically with respect to the axis of rotation (M) thereof and has an absolutely encoded graduation track (26) and an incremental graduation track (27),
• at least two scanning units (30, 31), which are arranged distributed with an angle offset over the circumference of the code disc (20), in each case for ascertaining absolute position values (PA_1, PA_2) by scanning the absolutely encoded graduation track (26) and in each case for producing incremental position signals (P0_1, P90_1, P0_2, P90_2) by scanning the incremental graduation track (27), wherein the incremental position signals (P0_1, P90_1, P0_2, P90_2) are output as a sequence of state changes,
• a control unit (40), to which the absolute position values (PA_1, PA_2) and the incremental position signals (P0_1, P90_1, P0_2, P90_2) are able to be fed via interfaces (35, 36, 45, 46) to form a corrected absolute position value (PK) and which has a device interface (42) for communicating with subsequent electronics (100),
wherein the control unit (40) comprises a processing unit (41), having one counter unit (60, 61) per scanning unit (30, 31), which are able to be initialized with the absolute position values (PA_1, PA_2) of the respectively associated scanning unit (30, 31), and the counter unit (60, 61) is designed such that it counts state changes of the incremental position signals (P0_1, P90_1, P0_2, P90_2) of the associated scanning unit (30, 31) and the counter readings of the counter units (60, 61) are fed to a correction unit (65) as absolute position values (PZ_1, PZ_2), which processes them to form the corrected position value (PK), and the corrected position value (PK) is transmittable to the subsequent electronics (100) via the device interface (42).

2. Apparatus according to Claim 1, wherein the processing unit (141) furthermore comprises per scanning unit (30, 31) one interpolator unit (70, 71) and one code connection unit (80, 81), wherein
• the incremental position signals (P0_1, P90_1, P0_2, P90_2) of the associated scanning unit (30, 31) are fed in each case to the interpolator units (70, 71) and fine position values (PF_1, PF 2), which indicate the position within a signal period of the incremental position signals (P0_1, P90_1, P0_2, P90_2), are able to be generated in the interpolator units (70, 71), and
• the fine position values (PF_1, PF2) and the counter readings (PZ_1, PZ2) of the counter units (60, 61) are fed to the respective code connection units (80, 81), which generate herefrom high-resolution absolute position values (PH_1, PH_2) which are fed to the correction unit (65) to form the corrected position value (PK).

3. Apparatus according to Claim 1, wherein the scanning units (30, 31) are arranged distributed at regular angular distances around the circumference of the code track (25).

4. Apparatus according to one of the preceding claims, wherein one of the scanning units (30, 31) and the control unit (40) are combined to form a master scanning unit (50).

5. Method for angle measurement with an angle measuring device (10) according to Claim 1, including the following steps:
• initializing the counter units (60, 61) with the absolute position values (PA_1, PA_2) of the respectively associated scanning unit (30, 31),
• counting state changes of the incremental position signals (P0_1, P90_1, P0_2, P90_2) of the associated scanning unit (30, 31) using the counter units (60, 61),
• outputting the counter readings of the counter units (60, 61) to the correction unit (65) as absolute position values (PZ_1, PZ_2),
• processing the absolute position values (PZ_1, PZ_2) to form the corrected position value (PK), and
• transmitting the corrected position value to the subsequent electronics (100).

6. Method according to Claim 5, wherein the processing unit (141) furthermore comprises per scanning unit (30, 31) one interpolator unit (70, 71) and a code connection unit (80, 81), wherein
• the incremental position signals (P0_1, P90_1, P0_2, P90_2) of the associated scanning unit (30, 31) are fed in each case to the interpolator units (70, 71) and fine position values (PF_1, PF2), which indicate the position within a signal period of the incremental position signals (P0_1, P90_1, P0_2, P90_2), are generated in the interpolator units (70, 71), and
• the fine position values (PF_1, PF2) and the counter readings (PZ_1, PZ2) of the counter units (60, 61) are fed to the respective code connection units (80, 81), which generate herefrom high-resolution absolute position values (PH_1, PH_2) which are in turn fed to the correction unit (65) to form the corrected position value (PK).

7. Method according to Claim 5, wherein the corrected position value (PK) is formed by forming the average of the absolute position values (PZ_1, PZ_2), taking into consideration an offset.

8. Method according to Claim 6, wherein the corrected position value (PK) is formed by forming the average of the high-resolution absolute position values (PH_1, PH_2), taking into consideration an offset.

## Revendications

1. Dispositif de mesure d'angle sous la forme d'un appareil de mesure d'angle (10), comprenant
* un disque de codage (20) qui possède une piste de codage (25) disposée de manière concentrique par rapport à son axe de rotation (M) et dotée d'une piste graduée au codage absolu (26) et d'une piste graduée incrémentale (27),
* au moins deux unités de palpage (30, 31) qui sont disposées réparties avec un décalage angulaire sur le pourtour du disque de codage (20), respectivement pour la détermination de valeurs de position absolues (PA_1, PA_2) par palpage de la piste graduée au codage absolu (26) et respectivement pour générer des signaux de position incrémentaux (P0_1, P90_1, P0_2, P90_2) par palpage de la piste graduée incrémentale (27), les signaux de position incrémentaux (P0_1, P90_1, P0_2, P90_2) étant délivrés sous la forme d'une séquence de changements d'état,
* une unité de contrôle (40) à laquelle les valeurs de position absolues (PA_1, PA_2) et les signaux de position incrémentaux (P0_1, P90_1, P0_2, P90_2) peuvent être acheminés par le biais d'interfaces (35, 36, 45, 46) en vue de former une valeur de position absolue corrigée (PK) et qui possède une interface d'appareil (42) servant à la communication avec une électronique suivante (100), l'unité de contrôle (40) comportant une unité de traitement (41) dotée d'une unité de comptage (60, 61) par unité de palpage (30, 31), laquelle peut être initialisée avec les valeurs de position absolues (PA_1, PA_2) de l'unité de palpage (30, 31) respectivement associée, et l'unité de comptage (60, 61) étant configurée de telle sorte qu'elle compte les changements d'état des signaux de position incrémentaux (P0_1, P90_1, P0_2, P90_2) de l'unité de palpage (30, 31) associée et les états de comptage des unités de comptage (60, 61) sont acheminés sous la forme de valeurs de position (PZ_1, PZ_2) absolues à une unité de correction (65) qui traite celles-ci en une valeur de position corrigée (PK), et la valeur de position corrigée (PK) pouvant être acheminée à l'électronique suivante (100) par le biais de l'interface d'appareil (42).

2. Dispositif selon la revendication 1, l'unité de traitement (141) comportant en outre une unité d'interpolation (70, 71) et une unité de connexion à codage (80, 81) par unité de palpage (30, 31),
* les signaux de position incrémentaux (P0_1, P90_1, P0_2, P90_2) de l'unité de palpage (30, 31) associée étant respectivement acheminés aux unités d'interpolation (70, 71) et des valeurs de position précises (PF_1, PF_2) pouvant être générées dans les unités d'interpolation (70, 71), lesquelles indiquent la position à l'intérieur d'une période de signal des signaux de position incrémentaux (P0_1, P90_1, P0_2, P90_2), et
* les valeurs de position précises (PF_1, PF_2) et les états de comptage (PZ_1, PZ_2) des unités de comptage (60, 61) étant acheminées aux unités de connexion à codage (80, 81) respectives, lesquelles génèrent à partir de celles-ci des valeurs de position absolues à haute résolution (PH_1, PH_2) qui sont acheminées à l'unité de correction (65) en vue de former la valeur de position corrigée (PK).

3. Dispositif selon la revendication 1, les unités de palpage (30, 31) étant disposées réparties à des écarts angulaires réguliers autour du pourtour de la piste de codage (25).

4. Dispositif selon l'une des revendications précédentes, l'une des unités de palpage (30, 31) et l'unité de contrôle (40) étant regroupées en une unité de palpage maître (50).

5. Procédé de mesure d'angle avec un appareil de mesure d'angle (10) selon la revendication 1, comprenant les étapes suivantes :
* initialisation des unités de comptage (60, 61) avec les valeurs de position absolues (PA_1, PA_2) de l'unité de palpage (30, 31) respectivement associée,
* comptage des changements d'état des signaux de position incrémentaux (P0_1, P90_1, P0_2, P90_2) de l'unité de palpage (30, 31) associée avec les unités de comptage (60, 61),
* délivrance des états de comptage des unités de comptage (60, 61) sous la forme de valeurs de position (PZ_1, PZ_2) absolues à l'unité de correction (65),
* traitement des valeurs de position (PZ_1, PZ_2) absolues en une valeur de position corrigée (PK), et
* transmission de la valeur de position corrigée à l'électronique suivante (100).

6. Procédé selon la revendication 5, l'unité de traitement (141) comportant en outre une unité d'interpolation (70, 71) et une unité de connexion à codage (80, 81) par unité de palpage (30, 31),
* les signaux de position incrémentaux (P0_1, P90_1, P0_2, P90_2) de l'unité de palpage (30, 31) associée étant respectivement acheminés aux unités d'interpolation (70, 71) et des valeurs de position précises (PF_1, PF_2) étant générés dans les unités d'interpolation (70, 71), lesquelles indiquent la position à l'intérieur d'une période de signal des signaux de position incrémentaux (P0_1, P90_1, P0_2, P90_2), et
* les valeurs de position précises (PF_1, PF_2) et les états de comptage (PZ_1, PZ_2) des unités de comptage (60, 61) étant acheminées aux unités de connexion à codage (80, 81) respectives, lesquelles génèrent à partir de celles-ci des valeurs de position absolues à haute résolution (PH_1, PH_2) qui sont à leur tour acheminées à l'unité de correction (65) en vue de former la valeur de position corrigée (PK).

7. Procédé selon la revendication 5, la valeur de position corrigée (PK) étant formée par calcul de la valeur moyenne à partir des valeurs de position (PZ_1, PZ_2) en tenant compte d'un décalage.

8. Procédé selon la revendication 6, la valeur de position corrigée (PK) étant formée par calcul de la valeur moyenne à partir des valeurs de position absolues à haute résolution (PH_1, PH_2) en tenant compte d'un décalage.
